Europäisches Patentamt

European Patent Office

Office européen des brevets

(19)

(11) Veröffentlichungsnummer: **0 029 605**

A1

(12) **EUROPÄISCHE PATENTANMELDUNG**

(21) Anmeldenummer: 80107297.6

(22) Anmeldetag: 23.11.80

(51) Int. Cl.³: **D 06 F 39/08**
G 01 M 3/18, F 17 D 5/02

(30) Priorität: 24.11.79 DE 2947433

(43) Veröffentlichungstag der Anmeldung:
03.06.81 Patentblatt 81/22

(84) Benannte Vertragsstaaten:
AT BE CH FR GB IT LI LU NL SE

(71) Anmelder: Frei, Hans-Joachim
Brunnenstrasse 1
D-6480 Wächtersbach(DE)

(71) Anmelder: Hartung, Philibert
Wiesenweg 13
D-6486 Brachttal 1(DE)

(71) Anmelder: Merten, Ernst
Zur schönen Aussicht 21
D-6551 Gutenberg(DE)

(72) Erfinder: Frei, Hans-Joachim
Brunnenstrasse 1
D-6480 Wächtersbach(DE)

(72) Erfinder: Hartung, Philibert
Wiesenweg 13
D-6486 Brachttal 1(DE)

(72) Erfinder: Merten, Ernst
Zur schönen Aussicht 21
D-6551 Gutenberg(DE)

(74) Vertreter: Keil, Rainer, Dipl.-Phys.Dr.
Patentanwälte MERTENS & KEIL Ammelburgstrasse 34
D-6000 Frankfurt am Main(DE)

(54) Sicherheitseinrichtung für Druckmittelzuleitungen.

(57) Die Erfindung bezieht sich auf eine Sicherheitseinrichtung für Druckmittelzuleitungen, mit welcher das Problem gelöst werden soll, eine Leckage einer solchen Leitung möglichst zuverlässig und schnell feststellen zu können. Gelöst wird das Problem durch einen Doppelschlauch (3) als Druckmittelzuleitung, in dessen Zwischenkammer (9) ein elektrischer Leiter (10) mit einer im ungestörten Zustand offenen Kontaktstrecke (8) angeordnet ist, welche bei Druckmittelaustritt aus dem Innenschlauch überbrückt wird, wodurch ein Magnetventil (2) in der Zuleitung ansteuerbar ist.

Hans-Joachim Frei

Brunnenstr. 1

6480 Wächtersbach


und


Philibert Hartung

Wiesenweg 13

6486 Brachttal 1


und


Ernst Merten

Zur schönen Aussicht 21

6551 Gutenberg

"Sicherheitseinrichtung für Druckmittelzuleitungen"

Die Erfindung betrifft eine Sicherheitseinrichtung für
Druckmittelzuleitungen für Druckmittelverbraucher, insbesondere einen Anschlußschlauch aufweisende Wasserversorgungsleitungen für Haushaltsgeräte, wie Wasch- oder
Spülmaschinen, mit wenigstens einem Magnetventil in der
Druckmittelzuleitung, welches lediglich bei Einschalten
des Druckmittelverbrauchers geöffnet ist.

Solche Sicherheitseinrichtungen sollen beispielsweise Wasserschäden bei Wasch- oder Spülmaschinen verhindern helfen,
wenn der Anschlußschlauch bricht oder auch nur geringe
Leckstellen in diesem Anschlußschlauch auftreten. Dadurch, daß das Druckmittel nur in dem Anschlußschlauch ansteht, wenn der Verbraucher auch tatsächlich eingeschaltet ist, wird bereits eine erhebliche Gefahrenquelle beseitigt, nämlich die Gefahr, daß Leckstellen oder ein Bruch des Anschlußschlauches während längerer Abwesenheit, so beispielsweise in den Ferien, in welchen der Verbraucher nicht eingeschaltet ist, zu einem Wasserschaden führen können. Damit ist aber die Gefahr eines Wasserschadens während des Betriebs des Verbrauchers noch nicht ausgeschlossen.

Bei einer Sicherheitseinrichtung der eingangs genannten Art ist beispielsweise nach der DE-OS 24 06 829 deswegen zwischen zwei in der Druckmittelzuleitungen angeordneten Magnetventilen ein Sperrventil angeordnet, welches bei Druckabfall in der Druckmittelzuleitung wenigstens eines der Magnetventile schließt. Das Sperrventil ist eine zusätzliche Armatur, die folglich besonderer konstruktiver und damit finanzieller Aufwendungen bedarf. Es ist ein Bauteil, welches dem Verschleiß bzw. der Alterung unterworfen ist und daher die Sicherheit auf längere Zeit nicht gewährleisten kann. Wesentlich ist aber insbesondere auch, daß dieses Sperrventil nur einen Druckabfall vorgegebener Höhe feststellen kann. Damit kann aber beispielsweise ein Wasserschaden, der aufgrund vergleichsweise kleiner Leckstellen erfolgt, nicht mit Sicherheit ausgeschlossen werden, insbesondere dann, wenn die Leckstelle und die Wasserschadensstelle verdeckt liegen und von dem Benutzer der Wasch- oder Spülmaschine nicht ohne weiteres festgestellt werden können.

Aufgabe der vorliegenden Erfindung ist es daher, eine Sicherheitseinrichtung der eingangs genannten Art so weiterzubilden, daß sie mit vergleichsweise geringem technischen Aufwand auch geringste Undichtigkeiten in dem Anschlußschlauch schnell und sicher feststellen kann.

Diese Aufgabe wird mit der Erfindung dadurch gelöst, daß der Anschlußschlauch einen äußeren und einen inneren Schlauch aufweist, die über den wesentlichen Teil ihrer Länge eine hohlzylindrische, den inneren Schlauch umgebende Zwischenkammer begrenzen, in welcher ein bis auf eine Kontaktstrecke geschlossener auf einen das Magnetventil betätigenden Schalter wirkender elektrischer Leiter angeordnet ist.

Sobald der innere Schlauch eine auch noch so geringe Leckstelle aufweist, tritt das Wasser in die Zwischenkammer ein und die Kontaktstrecke des Leiters, die bisher das Schließen des Magnetventiles verhinderte, wird überbrückt, der Stromfluß durch den elektrischen Leiter wirkt auf den Schalter, der das Magnetventil betätigt, d.h. das Magnetventil, das eingangsseitig des Anschlußschlauches liegt, schließt. Auf diese Weise können Wasserschäden auch bei geringsten Leckstellen schnell und sicher verhindert werden.

Besonders zweckmäßig ist es, wenn der elektrische Leiter den inneren Schlauch spiralförmig umgibt.

Eine zusätzliche Sicherung kann dadurch erreicht werden, daß die Zwischenkammer über einen Druckanschluß auf den Schalter wirkt, auf den auch die elektrische Leitung arbeitet. Unter Ausnutzung des gleichen Schalters kann nämlich dadurch eine Schließung des Magnetventiles jedenfalls dann erzielt werden, wenn der elektrische Leiter durch Beschädigung defekt sein sollte. Der Schalter spricht dann entweder auf einen erhöhten Druck an, der ihm von dem Druckanschluß vermittelt wird, oder er spricht auf das aus der Zwischenkammer ansteigende Druckmittelniveau an. Aus der DE-OS 26 12 647 ist es zwar an sich bekannt, den Druckanstieg in der Zwischenkammer zwischen zwei Schläuchen auszunutzen. Hierzu ist jedoch eine vergleichsweise aufwendige
mechanische Ventilanordnung erforderlich, die ein zuverlässiges und wartungsfreies Funktionieren über längere
Dauer nicht gewährleisten kann.

Eine besonders einfache konstruktive Ausführungsform der
Erfindung ergibt sich, wenn der innere Schlauch an seinen
beiden Enden in je einem Anschlußstück gehalten ist, welches
dichtend in den äußeren Schlauch einsetzbar ist.

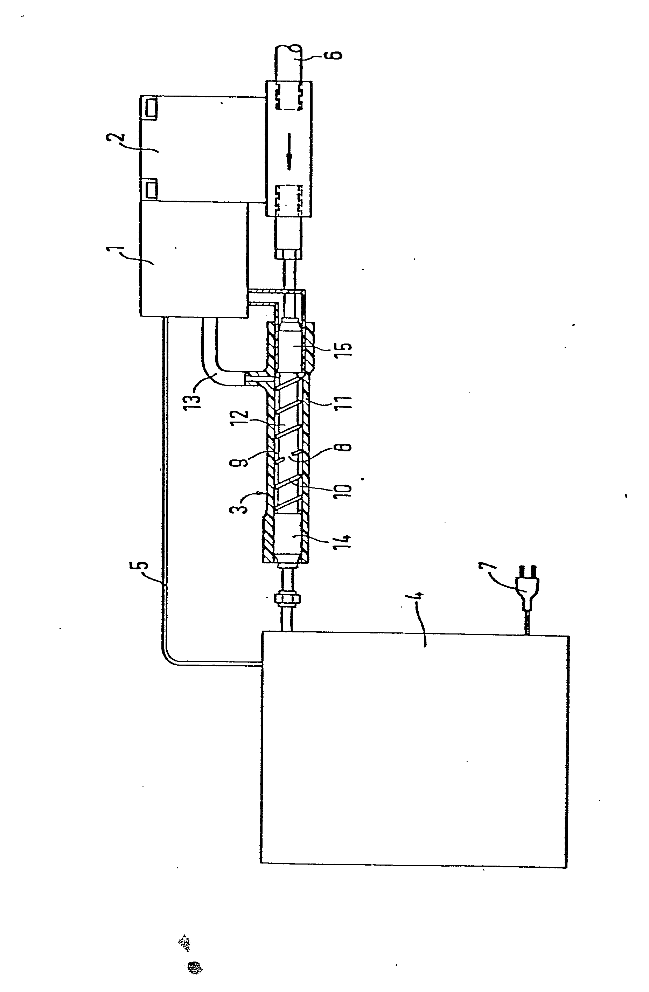

Weitere Merkmale, Vorteile und Anwendungsmöglichkeiten
der vorliegenden Erfindung ergeben sich aus der nachfolgenden
Beschreibung eines Ausführungsbeispieles anhand der beiliegenden Zeichnung. Dabei bilden alle beschriebenen und/oder
bildlich dargestellten Merkmale für sich oder in beliebiger
sinnvoller Kombination den Gegenstand der vorliegenden
Erfindung auch unabhängig von ihrer Zusammenfassung in
den Ansprüchen oder deren Rückbeziehung.

Es zeigt die einzige Figur schematisch eine die Erfindung
aufweisene Sicherheitseinrichtung.

Ein Verbraucher 4, z.B. eine Waschmaschine, die einen Elektroanschluß 7 aufweist, wird von einem Wasseranschluß 6 aus
mit dem notwendigen Druckmittel, nämlich Wasser, versorgt.
In dem Wasseranschluß 6 liegt ein Magnetventil 2, welches
aufgrund einer Stromleitung 5, die auf einen Schalter 1
des magnetventils 2 arbeitet, nur dann betätigt, d.h. geöffnet ist, wenn der Verbraucher 4 elektrisch eingeschaltet
ist. Zwischen dem Magnetventil 2 und dem Verbraucher 4
liegt in der Druckmittelzuführungsleitung ein Anschlußschlauch
3. Der Anschlußschlauch 3 besteht aus einem äußeren Schlauch
11 und einem inneren Schlauch 12, die zwischen sich eine Zwischenkammer 9 bilden. Der innere Schlauch 12 ist mit
zwei an seinen Enden angebrachten Anschlußstücken 14 und
15 dichtend in den äußeren Schlauch 11 eingesteckt. In
der Zwischenkammer 9 befindet sich ein den inneren Schlauch
12 spiralförmig umgebender elektrischer Leiter 10, welcher
an einer Kontaktstrecke 8 unterbrochen ist. Der elektrische
Leiter 10 arbeitet ebenfalls auf den Schalter 1. Solange
die Kontaktstrecke 8 unterbrochen ist, wird der Schalter
1 nicht betätigt, d.h. das Magnetventil 2 nicht geschlossen.
Tritt aber in dem inneren Schlauch 12 eine Leckstelle auf,
dringt Wasser in die Zwischenkammer 9 ein, die Kontaktstrecke 8 wird elektrisch überbrückt, der Schalter 1 betätigt und das Magnetventil 2 geschlossen. Eine weitere
Sicherheit wird dadurch erreicht, daß die Zwischenkammer
9 über einen Druckanschluß 13 ebenfalls auf den Schalter
1 einwirkt, entweder dadurch, daß eine Druckbeaufschlagung
des Druckmittels auf den Schalter 1 stattfindet oder der
Schalter 1 den Niveauanstieg des Druckmittels aus der Zwischenkammer 9 heraus feststellt. Damit führt eine in dem inneren
Schlauch 12 auftretene Leckstelle ebenfalls zu einem Schliessen des Magnetventils 2, selbst wenn der elektrische Leiter
10 aufgrund eines Defektes oder einer Beschädigung unterbrochen bleiben sollte.

Die erfindungsgemäße Sicherheitseinrichtung eignet sich
nicht nur für das spezielle Druckmittel Wassser, sondern
auch für andere vergleichbare Druckmittel, die eine Kontaktstrecke überbrücken können. Die erfindungsgemäße Sicherheitseinrichtung ist insbesondere auch nicht auf die besonderen Anwendungsfälle von Wasch- oder Spülmaschinen
beschränkt. Sie kann dort überall ihren Einsatz finden,
wo Druckmittel, vorzugsweise flüssige Druckmittel in Leitungen geführt werden sollen, deren Leckage überwacht werden
soll. Die Erfindung ist auch deswegen nicht beschränkt auf die Verwendung eines Anschlußschlauches, also eines vergleichsweise flexiblen Gebildes. Statt dessen sind auch jegliche Art von Leitungen im Rahmen des Erfindungsgedankens verwendbar, die eine Zwischenkammer begrenzen.

**0029605**

Bezugszeichenliste:

1   Schalter

2   Magnetventil

3   Anschlußschlauch

4   Wsch- oder Spülmaschine (Verbraucher)

5   Stromverbindung

6   Wasseranschluß

7   Elektroanschluß

8   Kontaktstrecke

9   Zwischenkammer

10  elektrischer Leiter

11  äußerer Schlauch

12  innerer Schlauch

13  Druckanschluß

14  Anschlußstück

15  Anschlußstück

Hans-Joachim Frei

Brunnenstr. 1

6480 Wächtersbach


und


Philibert Hartung

Wiesenweg 13

6486 Brachttal 1


und


Ernst Merten

Zur schönen Aussicht 21

6551 Gutenberg


"Sicherheitseinrichtung für Druckmittelzuleitungen"


Ansprüche:


1. Sicherheitseinrichtung für Druckmittelzuleitungen für Druckmittelverbraucher, insbesondere einen Anschlußschlauch aufweisende Wasserversorgungsleitungen für Haushaltsgeräte, wie Wasch- oder Spülmaschinen, mit wenigstens einem Magnetventil in der Druckmittelzuleitung, welches lediglich bei Einschalten des Druckmittelverbrauchers geöffnet ist, dadurch gekennzeichnet, daß der Anschlußschlauch (3) einen äußeren (11) und einen inneren Schlauch (12) aufweist, die über den wesentlichen Teil ihrer Länge eine hohlzylindrische, den inneren Schlauch (12) umgebende Zwischenkammer (9) begrenzen, in welcher ein bis auf eine Kontaktstrecke (8) geschlossener, auf einen das Magnetventil (2) betätigenden Schalter (1) wirkender elektrischer Leiter (10) angeordnet ist.

2. Sicherheitseinrichtung nach Anspruch 1, dadurch gekennzeichnet, daß der elektrische Leiter (10) den inneren Schlauch (12) spiralförmig umgibt.

3. Sicherheitseinrichtung nach Anspruch 1 oder 2, dadurch gekennzeichnet, daß die Zwischenkammer (9) über einen Druckanschluß (13) auf den Schalter (1) wirkt.

4. Sicherheitseinrichtung nach einem der Ansprüche 1 bis 3, dadurch gekennzeichnet, daß der innere Schlauch (12) an seinen beiden Enden in je einem Anschlußstück (14, 15) gehalten ist, welches dichtend in den äußeren Schlauch (11) einsetzbar ist.

0029605

0029605

Europäisches Patentamt

**EUROPÄISCHER RECHERCHENBERICHT**

Nummer der Anmeldung

EP 80 10 7297

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | EP - A - 0 005 197 (HÖFFGEN)<br><br>* Ansprüche 1,2 *<br><br>-- | 1,3,4 |
| D,A | DE - A - 2 612 647 (H. SEIPEL)<br><br>* Ansprüche 1,8,9 *<br><br>-- | 1,4 |
| | DE - A - 2 634 963 (KLEIN)<br><br>* Ansprüche 4,5,7 *<br><br>-- | 1,3,4 |
| | DE - A - 2 640 161 (BRANDES)<br><br>* Ansprüche 1,11; Seite 8, Zeilen 11-17 *<br><br>-- | 1,2 |
| | DE - A - 2 550 940 (HOWALDTS-WERKE-DEUTSCHE WERFT)<br><br>* Ansprüche *<br><br>-- | 1,2 |
| A | DE - A - 2 345 889 (LICENTIA)<br><br>* Ansprüche *<br><br>------------ | 1 |

**KLASSIFIKATION DER ANMELDUNG (Int Cl.³)**

D 06 F 39/08
G 01 M 3/18
F 17 D 5/02

**RECHERCHIERTE SACHGEBIETE (Int. Cl.³)**

D 06 F
G 01 M
F 17 D

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-02-1981 | D'HULSTER |

EPA form 1503.1   06.78